# EUROPÄISCHE PATENTSCHRIFT

(11) **EP 2 394 134 B1**
(45) Veröffentlichungstag und Bekanntmachung des Hinweises auf die Patenterteilung: **28.11.2012**
(21) Anmeldenummer: 10703017.3
(22) Anmeldetag: 03.02.2010
(51) Int. Cl.: G01B 5/012

(54) **TASTKOPFSYSTEM FÜR EIN KOORDINATENMESSGERÄT**
SENSING HEAD SYSTEM FOR A COORDINATE MEASURING INSTRUMENT
SYSTÈME PALPEUR POUR UN APPAREIL DE MESURE DE COORDONNÉES

(30) Priorität: 06.02.2009 DE 102009008722
(43) Veröffentlichungstag der Anmeldung: 14.12.2011
(73) Patentinhaber: Carl Zeiss Industrielle Messtechnik GmbH, 73447 Oberkochen (DE)
(72) Erfinder: RUCK, Otto, 73479 Ellwangen-Pfahlheim (DE)
(74) Vertreter: Witte, Weller & Partner
(86) Internationale Anmeldenummer: PCT/EP2010/000653
(87) Internationale Veröffentlichungsnummer: WO 2010/089093

(56) Entgegenhaltungen:
- US-A- 4 938 083
- US-A- 5 339 535
- US-B1- 6 430 828

## Beschreibung

Die vorliegende Erfindung betrifft ein Koordinatenmessgerät zum Bestimmen von Raumkoordinaten an einem Messobjekt, mit einem eine Tastkopfsensorik aufweisenden Tastkopf, der ein Rumpfteil und ein relativ zum Rumpfteil bewegliches Kupplungsteil besitzt, an dem ein Tastwerkzeug angeordnet ist, sowie einem Gestellaufbau, der dazu ausgebildet ist, den Tastkopf relativ zu dem Messobjekt zu verfahren, wobei das Tastwerkzeug mindestens einen Taststift zum Antasten des Messobjekts und einen Drehteller aufweist, über den der Taststift drehbar an das Kupplungsteil angekoppelt ist.

Ferner betrifft die Erfindung ein Tastkopfsystem für ein solches Koordinatenmessgerät sowie ein Verfahren zum Bestimmen von Raumkoordinaten mittels eines derartigen Koordinatenmessgeräts.

Ein Koordinatenmessgerät mit einem drehbaren Tastwerkzeug und ein Tastkopfsystem sind beispielsweise aus der US 6,430,828 bekannt.

Das bekannte Koordinatenmessgerät besitzt einen Tastkopf, an dem ein Tastwerkzeug mit einem Taststift angeordnet ist, welcher am unteren freien Ende einer vertikal angeordneten Pinole befestigt ist. Die Pinole ist in Vertikalrichtung verfahrbar, so dass der Tastkopf senkrecht zu einem Messtisch verfahren werden kann, der zur Aufnahme eines Messobjektes dient. Die Pinole ist ihrerseits an dem Querträger eines Portals angeordnet, und sie kann an dem Querträger in einer ersten Horizontalrichtung verfahren werden. Das Portal kann zusammen mit der Pinole in einer zweiten Horizontalrichtung verfahren werden, so dass der Tastkopf insgesamt in drei zueinander senkrechten Raumrichtungen verfahren werden kann. Die maximalen Verfahrwege des Tastkopfes entlang der drei Bewegungsachsen bestimmt das Messvolumen, innerhalb dessen Raumkoordinaten an einem Messobjekt bestimmt werden können.

Zur Durchführung einer Messung wird das Messobjekt auf dem Messtisch angeordnet. Anschließend werden ausgewählte Messpunkte an dem Messobjekt mit der freien Spitze des Taststiftes angetastet. Aus der Stellung des Tastkopfes innerhalb des Messvolumens sowie aus den Auslenkungen des Taststiftes relativ zum Tastkopf kann man dann Raumkoordinaten für den angetasteten Messpunkt bestimmen. Durch Bestimmen von mehreren Raumkoordinaten an verschiedenen Messpunkten lassen sich geometrische Abmessungen und sogar die Objektkontur des Messobjektes bestimmen. Ein typisches Anwendungsgebiet für solche Koordinatenmessgeräte ist die Vermessung von Werkstücken zur Qualitätskontrolle.

Häufig liegen die Messpunkte an einem Messobjekt an einer für den Taststift schwer zugänglichen Stelle, z.B. wenn die Tiefe einer seitlich am Messobjekt angeordneten Bohrung bestimmt werden soll. Um an derartig "versteckte" Messpunkte zu gelangen, ist es bekannt, verschiedene Tastwerkzeuge mit unterschiedlichen Taststiften und/oder Taststiftkombinationen einzusetzen. Beispielsweise gibt es Tastwerkzeuge, bei denen ein Taststift quer zur räumlichen z-Achse des Koordinatenmessgerätes angeordnet ist. Zur Durchführung vielfältiger und komplexer Messaufgaben sind daher häufige Wechsel der Taststifte und/oder Taststiftkombinationen erforderlich. Dies ist von Nachteil, weil ein Taststiftwechsel Zeit kostet und sich daher die Zeit für die Durchführung der Messung verlängert. Dies ist insbesondere auf einen langen Verfahrweg des Tastkopfes zurückzuführen, da der Tastkopf typischerweise an einem außerhalb des Messvölumens angeordneten Magazin ausgewechselt wird. Dadurch muss der Tastkopf aus dem Messvolumen herausgefahren werden und anschließend zu der Ursprungsposition zurückkehren, um den Wechsel durchzuführen. Somit ist die für den Wechsel benötigte Zeit insbesondere von der Größe des Koordinatenmessgerätes abhängig. Darüber hinaus ist die Flexibilität auf die zur Verfügung stehenden Tastwerkzeuge beschränkt, was bei komplexen'Messungen zu einer Vielzahl an benötigten Tastwerkzeugen führt. Soll beispielsweise die Tiefe einer Bohrung bestimmt werden, die um 45° gegenüber der Oberfläche des Messobjektes geneigt ist, wird ein geeigneter Taststift oder eine geeignete Taststiftkombination benötigt. Weiter wird durch die Verwendung derartiger Taststifte und/oder Taststiftkombinationen das Messvolumen eingegrenzt, da der Tastkopf nur so weit verfahren werden kann, bis er mit einem der Querträger in Berührung kommt. Bei besonders langen Taststiften führt dies zu einer entsprechend großen Einschränkung.

Die eingangs genannte US 6,430,828 schlägt ein Koordinatenmessgerät mit einem Magazin vor, welches eine Vorrichtung zum Drehen des Tastwerkzeuges aufweist. Diese Drehung erfolgt um die räumliche z-Achse, indem das Tastwerkzeug mitsamt dem Taststift und/oder der Taststiftkombination in dieser Vorrichtung abgelegt wird, also vom Tastkopf getrennt wird, durch die Vorrichtung gedreht und anschließend vom Tastkopf wieder aufgenommen wird.

Mit dieser Vorrichtung wird erreicht, dass jedes Tastwerkzeug in unterschiedlichen gedrehten Positionen eingesetzt werden kann. Auf diese Weise wird die Zahl der benötigten Tastwerkzeuge mit entsprechenden Taststiften und/oder Taststiftkombinationen verringert, da jedes Tastwerkzeug in unterschiedlichen Ausrichtungen um die z-Achse eingesetzt werden kann. Darüber hinaus ermöglicht dieses Vorgehen, die durch die Taststifte bedingte Einschränkung des Messvolumens zu verringern.

Nachteil hierbei ist, dass das Verdrehen des Tastwerkzeuges voraussetzt, dass das Tastwerkzeug am Magazin abgelegt werden muss, wodurch weiterhin viel Zeit benötigt wird, um den Tastkopf zum Magazin zu verfahren, dort abzusetzen und nach einer Wiederaufnahme zurückzusetzen.

Aus DE 101 14 126 ist ein Tastkopf bekannt, welcher es ermöglicht, ein an dein Tastkopf angeordnetes Tastwerkzeug direkt am Tastkopf zu verdrehen. Zu diesem Zweck ist am Tastkopf eine Absenkvorrichtung vorgesehen, welche das Tastwerkzeug zunächst absenkt, um dieses verdrehen zu können. Das Verdrehen erfolgt nach dem Absenken durch einen dafür vorgesehenen Elektromotor in Verbindung mit einem Zahnradgetriebe. Im Anschluss an das Verdrehen wird das Tastwerkzeug von der Absenkvorrichtung wieder angehoben.

Vorteil ist hier der Zeitgewinn, da das Tastwerkzeug zum Verdrehen nicht zu einem Magazin verfahren werden muss. Ferner wird erreicht, dass ein Tarierzustand des Tastkopfes beibehalten werden kann. Nachteilig ist, dass der Tastkopf zu diesem Zweck mit einer aufwändigen Absenkvorrichtung sowie einem eigens dafür bestimmten Motor und Getriebe ausgestattet werden muss. Dadurch erhöht sich die Masse des Tastkopfes, was zu unerwünschten Schwingungen am Tastkopf beim Verfahren führt. Darüber hinaus ergibt sich eine erhöhte Komplexität des Tastkopfes, die einen entsprechenden Mehraufwand bei Konstruktion, Produktion sowie Wartung bewirkt.

US 5,185,936 beschreibt einen anderen Tastkopf mit einem verdrehbaren Tastwerkzeug. Das Tastwerkzeug wird magnetisch an dem Tastkopf gehalten. Ein Haltemagnet ist während der Verwendung des Tastwerkzeuges von diesem beabstandet angeordnet. Zudem ist er mit einer Welle verbunden, welche mittels eines dafür vorgesehenen Motors verdrehbar ist. Zum Verdrehen des Tastkopfes wird der Haltemagnet mitsamt der Welle in Richtung des Tastwerkzeuges bewegt, so dass das Tastwerkzeug aus seiner Position ausgerückt wird. Mittels des Motors wird dann das Tastwerkzeug verdreht. Anschließend wird die Welle in ihre Ursprungsposition zurückgezogen, so dass sich der Haltemagnet von dem Tastwerkzeug löst. Dadurch ergeben sich die bereits zuvor genannten Vorteile sowie Nachteile.

Vor diesem Hintergrund ist es eine Aufgabe der vorliegenden Erfindung, ein Koordinatenmessgerät der eingangs genannten Art anzugeben, das die Anzahl benötigter Taststiftwechsel reduziert und die Anzahl notwendiger Tastwerkzeuge mit entsprechenden Taststiften und/oder Taststiftkombinationen verringert, wobei gleichzeitig die Masse und die Komplexität des Tastkopfes gering gehalten werden soll. Ferner soll das zur Verfügung stehende Messvolumen auf möglichst effiziente Weise genutzt werden.

Gemäß einem Aspekt der Erfindung wird gemäß Anspruch 1 ein Koordinatenmessgerät der eingangs genannten Art vorgeschlagen, bei dem am Rumpfteil mindestens ein Abrollvorsprung ausgebildet ist, an dem der Drehteller durch eine Bewegung des Kupplungsteils abrollbar ist.

Gemäß einem weiteren Aspekt der Erfindung wird ein Tastkopfsystem für ein Koordinatenmessgerät zum Bestimmen von Raumkoordinaten an einem Messobjekt vorgeschlagen, bestehend aus einem eine Tastkopfsensorik aufweisenden Tastkopf, der ein Rumpfteil und ein relativ zum Rumpfteil bewegliches Kupplungsteil besitzt, und einer Vielzahl alternativ mit dem Kupplungsteil koppelbarer Tastwerkzeuge, wobei das Koordinatenmessgerät einen Gestellaufbau aufweist, der dazu ausgebildet ist, den Tastkopf relativ zu dem Messobjekt zu verfahren, wobei mindestens eines der Tastwerkzeuge mindestens einen Taststift zum Antasten des Messobjektes und einen Drehteller aufweist, über den der Taststift drehbar an das Kupplungsteil angekoppelt ist, wobei am Rumpfteil mindestens ein Abrollvorsprung ausgebildet ist, an dem der Drehteller durch eine Bewegung des Kupplungsteils abrollbar ist.

Gemäß einem weiteren Aspekt der Erfindung wird gemäß Anspruchs 15 ein Verfahren vorgeschlagen zum Bestimmen von Raumkoordinaten an einem Messobjekt, mit einem Koordinatenmessgerät, das einen eine Tastkopfsensorik aufweisenden Tastkopf besitzt, der ein Rumpfteil und ein relativ zum Rumpfteil bewegliches Kupplungsteil aufweist, an dem ein Tastwerkzeug angeordnet ist, sowie einem Gestellaufbau, der dazu ausgebildet ist, den Tastkopf relativ zu dem Messobjekt zu verfahren, wobei das Tastwerkzeug mindestens einen Taststift zum Antasten des Messobjektes und einen Drehteller aufweist, über den der Taststift drehbar an das Kupplungsteil angekoppelt ist, wobei das Tastwerkzeug gedreht wird, indem der Drehteller an einem am Rumpfteil ausgebildeten Abrollvorsprung durch Bewegen des Kupplungsteils abgerollt wird.

Das neue Koordinatenmessgerät besitzt die Vorteile eines Tastkopfes mit einem verdrehbaren Tastwerkzeug. Im Gegensatz zu den bislang bekannten Vorschlägen benötigt das neue Koordinatenmessgerät jedoch keine komplexen Vorrichtungen zum Verdrehen des Tastwerkzeuges. Vielmehr besitzt der Tastkopf einen Abrollvorsprung, an dem das Tastwerkzeug zum Verdrehen abgerollt werden kann. Unter "Abrollen" wird im Zuge dieser Anmeldung verstanden, dass zwischen dem Tastwerkzeug und dem Abrollvorsprung eine Traktionsverbindung besteht, welche insbesondere durch einen Reibschluss oder Formschluss hergestellt werden kann. Dabei ist vorgesehen, dass der Drehteller zum Verdrehen des Tastwerkzeuges mit dem Abrollvorsprung zusammenwirkt, indem der Drehteller relativ zum Abrollvorsprung verlagert wird, bis die Traktionsverbindung besteht. Die entsprechende Bewegung des Kupplungsteils, und damit des Drehtellers, relativ zu dem Abrollvorsprung ermöglicht anschließend, den Drehteller im Wesentlichen schlupffrei an dem Abrollvorsprung zu verdrehen. Die Verdrehung erfolgt vorzugsweise um die räumliche z-Achse. Verdrehungen um weitere oder andere Achsen sind ebenfalls denkbar. Die benötigte Bewegung des Kupplungsteils zum Verdrehen des Tastwerkzeuges ergibt sich aus der geometrischen Ausgestaltung des Abrollvorsprungs. Ist dieser beispielsweise mit einer planen Abrollebene versehen, ergibt sich eine gerade Bewegung parallel zur Abrollebene für das Kupplungsteil. Bevorzugt sind gekrümmte Abrollebenen vorgesehen, welche dazu führen, dass das Kupplungsteil eine entsprechend gekrümmte Bewegung durchführen muss. Unter "Abrollebene" wird der Bereich des Abrollvorsprungs verstanden, der zur Bildung einer Traktionsverbindung verwendet werden kann.

Das neue Koordinatenmessgerät ermöglicht durch seine Ausgestaltung eine sehr schnelle Messung, da bei jeder notwendigen Änderung der Ausrichtung des Tastwerkzeuges der Tarierzustand des Tastkopfes erhalten bleibt und keine Fahrten zu einem Magazin für ein Verdrehen des Tastwerkzeuges benötigt werden. Darüber hinaus ergibt sich eine effiziente Ausnutzung des Messvolumens, da das Tastwerkzeug Hindernissen "ausweichen" kann.

Weiter ergibt sich daraus, dass das Magazin optimal ausgenutzt werden kann, da das Tastwerkzeug in seiner jeweils platzsparendsten Ausrichtung in dem Magazin abgelegt werden kann. Somit kann verhindert werden, dass sich insbesondere besonders lange Taststifte über mehrere Magazinplätze erstrecken.

Ein weiterer Vorteil ist, dass die Messung rotationssymmetrischer Teile ohne Rundtisch möglich ist, da die Ausrichtung der Taststifte am Tastwerkzeug den jeweiligen Gegebenheiten direkt angepasst werden kann. Gleichzeitig kann die Masse des Tastkopfes sehr gering gehalten werden, wodurch eine Verfahrgeschwindigkeit des Tastkopfes sehr hoch gewählt werden kann.

Zudem ergibt sich der Vorteil, dass bereits vorhandene Tastköpfe mit beweglichem Kupplungsteil in einfacher Weise mit einem Abrollvorsprung versehen ausgestattet werden können. Dadurch wird die Komplexität und die Masse des Tastkopfes gering gehalten.

Vorzugsweise ist vorgesehen, dass der Tastkopf und/oder das Tastwerkzeug eine Rastung aufweist/aufweisen, die eine sichere und hochgenaue Positionierung des Tastwerkzeuges ermöglicht. Beispielsweise sind als Rastung Rastkugeln denkbar, welche am Tastkopf paarweise angeordnet sind und mit am Tastwerkzeug angeordneten Rastwalzen zusammenwirken, indem die Rastwalzen zum Einrasten des Tastwerkzeuges spielfrei zwischen den Rastkugeln angeordnet werden. Besonders vorteilhaft ist hierbei eine gleichmäßig verteilte Anordnung von mindestens drei Rastkugelpaaren in Verbindung mit drei entsprechend angeordneten Rastwalzen, die eine Dreipunktlagerung bilden. Eine Vielzahl an Rastpositionen kann dadurch erreicht werden, dass eine entsprechende Vielzahl an Rastwalzen am Tastwerkzeug vorgesehen ist. Die Anwendung einer derartigen Rastung ermöglicht eine sichere und reproduzierbare Lagerung des Tastwerkzeuges.

Die oben genannte Aufgabe ist daher vollständig gelöst.

In einer bevorzugten Ausgestaltung weist die Tastkopfsensorik mindestens einen Messkraftgenerator auf, der die Bewegung des Kupplungsteils bewirkt.

In dieser Ausgestaltung wird ein vorteilhaft im Tastkopf angeordneter Messkraftgenerator dazu verwendet, um das Kupplungsteil zu bewegen. Dies erfolgt beispielsweise dadurch, dass Tauchspulen bestromt werden. Dadurch wird mindestens ein den Tauchspulen zugehöriger Kern mittels der entstehenden magnetischen Kräfte aus den Wicklungen der Tauchspulen ausgerückt oder in die Wicklungen eingerückt. Durch eine entsprechende mechanische Verbindung zwischen dem Kern und dem Kupplungsteil ist das Kupplungsteil mittels Aus- und/oder Einrücken des Kerns bewegbar. Vorzugsweise sind zwei Tauchspulen vorgesehen, welche orthogonal zueinander angeordnet sind, um somit eine zweidimensionale Bewegung des Kupplungsteils herbeizuführen. Vorteilhaft hierbei ist, dass kein zusätzlicher Motor benötigt wird, sondern vorhandene Mittel zum Bewegen des Kupplungsteils und somit zum Verdrehen des Tastwerkzeuges verwendet werden, welche ein sehr genaues Verfahren des Kupplungsteils und damit des Taststiftes zum Messobjekt ermöglichen.

In einer weiteren bevorzugten Ausgestaltung ist der Abrollvorsprung ein den Drehteller umschließendes Kreisrohr.

In dieser Ausgestaltung wird unter "umschließendes Kreisrohr" verstanden, dass sich das Kreisrohr in radialer Richtung um den Drehteller herum erstreckt und diesen zumindest weitgehend umgibt. Dabei ist von Vorteil, wenn der Innenmantel des Kreisrohrs, also die Abrollebene, einen Radius aufweist, der größer ist als der Radius des Drehtellers. Dadurch wird erreicht, dass der Drehteller nur dann mit der Abrollebene zusammenwirkt, wenn dies gewünscht ist. Darüber hinaus ergibt sich, dass der Drehteller ungehindert verdreht werden kann. Insbesondere bei einer kreisförmigen Ausgestaltung des Drehtellers ist die Möglichkeit gegeben, diesen durch eine kreisförmige Bewegung des Kupplungsteils um den Mittelpunkt des Kreisrohrs herum kontinuierlich zu verdrehen. Somit bilden Drehteller und Abrollvorsprung ein Reibgetriebe, durch welches der Drehteller entsprechend seiner Übersetzung verdreht wird. Ein Absetzen und eine anschließende Neuausrichtung des Drehtellers an der Abrollebene, wie dies bei einer nicht kontinuierlichen Abrollebene notwendig wäre, wird dadurch vermieden.

In einer weiteren Ausgestaltung weist das Koordinatenmessgerät mindestens ein Traktionselement, insbesondere einen O-Ring auf, das zwischen dem Drehteller und dem Abrollvorsprung angeordnet ist.

In dieser Ausgestaltung verbessert das Traktionselement die Traktionsverbindung zwischen dem Drehteller und dem Abrollvorsprurig beim Verdrehen des Drehtellers und dient gleichzeitig als Anschlag bei einem Anlegen des Drehtellers am Abrollvorsprung. Dabei sind insbesondere Materialien vorgesehen, welche eine hohe Reibung erzeugen, wie beispielsweise Gummi oder gummiartige Materialen.

Die Ausgestaltung des Traktionselements als O-Ring ergibt zusätzlich den Vorteil, dass dieser in Umfangsrichtung um den Drehteller herum angeordnet werden kann, wodurch der Drehteller umfänglich vollständig geschützt ist und die kontinuierliche Bewegung stetig unterstützt wird.

In einer weiteren Ausgestaltung bildet der Tastkopf mit dem Tastwerkzeug eine Ausrichtungserfassungsvorrichtung zum Erfassen der Ausrichtung des Drehtellers in Drehrichtung.

In dieser Ausbildung ermöglicht die Ausrichtungserfassungsvorrichtung, dass bei einem Verdrehen des Drehtellers oder bei einem Wechsel des Tastwerkzeuges festgestellt werden kann, welche Ausrichtung er aufweist. Dadurch können Kollisionen mit Elementen außerhalb des Messvolumens leichter verhindert werden. Weiterhin wird durch die Ausrichtungserfassungsvorrichtung eine Kontrolle über ein reproduzierbares Einrasten des Tastwerkzeuges in der Rastung des Tastkopfes ermöglicht, indem die korrekte Position verifiziert wird.

In einer weiteren Ausgestaltung ist vorgesehen, dass die Ausrichtungserfassungsvorrichtung mehrere Ausrichtungsbestimmungselemente, insbesondere elektrische Identifikationsschaltkreise, besitzt, die jeweils einer bestimmten Ausrichtung des Tastwerkzeuges zugeordnet sind, und mindestens einen Sensor besitzt, der mit den Ausrichtungsbestimmungselementen zusammenwirkt.

In dieser Ausgestaltung weist die Ausrichtungserfassungsvorrichtung jeder Ausrichtung des Tastwerkzeuges ein eigenes Ausrichtungsbestimmungselement zu, wodurch jede Ausrichtung eindeutig erkannt werden kann. Die Ausrichtungsbestimmungselemente sind vorzugsweise am Tastwerkzeug angeordnet, wodurch die Möglichkeit besteht, jedes Tastwerkzeug individuell mit Ausrichtungsbestimmungselementen auszustatten. Auf diese Weise können verschiedene Tastwerkzeuge eine unterschiedliche Anzahl an Ausrichtungsbestimmungselementen aufweisen, die den Anforderungen des jeweiligen Tastwerkzeuges genügen. Bei einer geringen Anzahl an unterschiedlichen benötigten Ausrichtungen können somit Ausrichtungsbestimmungselemente eingespart werden. Somit lassen sich zusätzlich Masse am Tastwerkzeug sowie Bauteile für die Ausrichtungsbestimmungselemente einsparen.

Der Sensor ist vorzugsweise am Tastkopf, insbesondere am Kupplungsteil, angeordnet, so dass während eines Messbetriebes des Koordinatenmessgerätes stets die Ausrichtung und die korrekte Einrastung des Tastwerkzeuges überprüft werden können.

Der Einsatz von Identifikationsschaltkreisen als Ausrichtungsbestimmungselemente führt dazu, dass in den Identifikationsschaltkreisen zusätzliche Informationen wie beispielsweise Typ des Tastwerkzeuges oder geometrische Daten des Tastwerkzeuges hinterlegt werden können. Die Identifikationsschaltkreise sind vorzugsweise als integrierte Schaltkreise ausgebildet.

In einer weiteren Ausgestaltung sind die Ausrichtungsbestimmungselemente in der Drehrichtung des Drehtellers winkelversetzt zueinander angeordnet.

In dieser Ausgestaltung liegen die Ausrichtungsbestimmungselemente vorzugsweise gleichmäßig winkelversetzt auf einer gedachten Kreislinie um den Mittelpunkt der Drehbewegung des Drehtellers bei einem Verdrehen. Somit werden automatisch die korrekten Ausrichtungsbestimmungselemente entsprechend der Ausrichtung des Drehtellers an den Sensor geführt, wenn dieser gegenüber den Ausrichtungsbestimmungselementen mit einer festen Position angeordnet ist.

In einer weiteren Ausgestaltung weisen die Ausrichtungsbestimmungselemente jeweils mindestens zwei Kontakte auf, die radial zu der Drehrichtung des Drehtellers aufeinanderfolgend angeordnet sind.

In dieser Ausgestaltung wird erreicht, dass beim Verdrehen ausschließlich der korrekte Kontakt an den zugehörigen Sensor geführt wird. Dies ist besonders bei einer elektrischen Verbindung, beispielsweise bei einer Ausführung der Ausrichtungsbestimmungselemente als Identifikationsschaltkreise, von Vorteil, da nur eine korrekte elektrische Verbindung mit den Ausrichtungsbestimmungselementen möglich ist. Insbesondere ist vorgesehen, bei der Verwendung von zwei Kontakten zwei den Kontakten zugeordnete Sensoren in Form von Gegenkontakten zu verwenden.

Der Drehteller und dessen aktuelle Ausrichtung sind somit stets erkennbar, auch direkt nach einem Einschalten des Koordinatenmessgerätes, also nach einem stromlosen Zustand. Aufgrund dieser Information können beispielsweise Kollisionen beim Wechseln des Tastwerkzeuges im Magazin verhindert werden.

In einer weiteren Ausgestaltung besitzt das Koordinatenmessgerät einen am Kupplungsteil beweglich angeordneten Zentrierzapfen, mit dem das Tastwerkzeug am Kupplungsteil angekoppelt ist.

In dieser Ausgestaltung ist es vorgesehen, den Drehteller mittels des Zentrierzapfens am Kupplungsteil zu zentrieren. Aufgrund der Beweglichkeit kann der Drehteller mit dem Zentrierzapfen verdreht werden, wodurch eine aufwändige Lagerung des Drehtellers am Zentrierzapfen entfällt.

Vorzugsweise ist ein Verschluss am Drehteller vorgesehen, welcher mit dem Zentrierzapfen zusammenwirkt. Der Verschluss ermöglicht eine sichere Koppelung zwischen dem Tastwerkzeug und dem Kupplungsteil. In einer bevorzugten Ausführung ist eine am Zentrierzapfen umfänglich angeordnete Nut vorgesehen, die eine Hintergriffsstufe bildet, die beim Ankoppeln des Drehtellers an dem Zentrierzapfen innerhalb des Drehtellers liegt. Zum sicheren Ankoppeln weist der Drehteller mindestens ein der Hintergriffsstufe zugeordnetes Verriegelungselement auf, das in die Nut eingreift und aufgrund der Hintergriffsstufe den Drehteller hält. Diese Kopplung benötigt zusätzlich eine Vorrichtung zum Trennen des Drehtellers vom Zentrierzapfen, um beispielsweise einen Wechsel des Tastwerkzeuges herbeiführen zu können. Auf diese Weise wird ein versehentliches Abwerfen des Tastwerkzeuges verhindert. Die Nut weist vorzugsweise eine abgeschrägte Wand auf, wodurch ein sicherer Sitz, ein leichtes Einrasten sowie ein einfaches Lösen erreicht werden. Ferner wird durch die Verwendung einer entsprechenden Wand ermöglicht, dass im Falle einer Kollision das Tastwerkzeug von dem Zentrierzapfen gelöst wird, so dass Schäden am Tastwerkzeug und/oder am Tastkopf vermindert oder verhindert werden.

In einer weiteren Ausgestaltung weist der bewegliche Zentrierzapfen mindestens eine Rastposition und mindestens eine Drehposition auf.

In dieser Ausgestaltung ist der Zentrierzapfen vorzugsweise in seiner Längserstreckung beweglich innerhalb des Kupplungsteils angeordnet. Die Rastposition ist dabei diejenige Position, in welcher der Drehteller am Kupplungsteil drehfixiert ist. In der Drehposition ist es möglich, den Drehteller gegenüber dem Kupplungsteil zu verdrehen. Dies wird insbesondere dadurch erreicht, dass der Zentrierzapfen zum Erreichen der Drehposition aus dem Kupplungsteil heraus bewegt wird und auf diese Weise der Drehteller einen Abstand zu dem Kupplungsteil gewinnt. In der Drehposition kann der Drehteller dann ungehindert, also ohne störenden Einfluss des Kupplungsteils oder beispielsweise der Rastung, verdreht werden. Zum Erreichen der Rastposition wird der Zentrierzapfen in dieser Ausgestaltung wieder in das Kupplungsteil hineinbewegt, so dass der Drehteller am Kupplungsteil anliegt und dadurch eine drehfixierte Lage besitzt. Das Herausbewegen des Zentrierzapfens kann insbesondere in Richtung der z-Achse durch Schwerkraft erfolgen, wohingegen das Hineinbewegen entsprechende Maßnahmen benötigt. Derartige Maßnahmen können durch ein Anziehen des Drehtellers mitsamt des Zentrierzapfens durch beispielsweise magnetische Kräfte erfolgen und/oder durch eine entsprechende Bewegung des Tastkopfes in Richtung des Drehtellers.

In einer weiteren Ausgestaltung besitzt der Zentrierzapfen mindestens einen konusförmigen Abschnitt, der mit mindestens einem Lagerelement zusammenwirkt.

In dieser Ausgestaltung wird erreicht, dass der Zentrierzapfen entweder in dem Lagerelement gelagert oder aus dem Lagerelement heraus bewegt werden kann. Bei einer Rückbewegung wird dann der Zentrierzapfen sofort bei Kontakt mit dem Lagerelement korrekt ausgerichtet und sicher gelagert.

In einer weiteren Ausgestaltung ist vorgesehen, dass der konusförmige Abschnitt in der Drehposition durch das Lagerelement spielfrei gelagert ist und in der Rastposition mit einem Abstand zu dem Lagerelement angeordnet ist.

In dieser Ausgestaltung ermöglicht die spielfreie Lagerung in der Drehposition ein hochgenaues Verdrehen des Tastwerkzeuges. Gleichzeitig wird erreicht, dass das Tastwerkzeug mit einem definierten Druck gegen den Abrollvorsprung gepresst werden kann, so dass sich während der Drehbewegung stets eine gleichbleibende Traktionsverbindung zwischen Abrollvorsprung und Drehteller ergibt. Dies ist insbesondere dann vorteilhaft, wenn Taststifte und/oder Taststiftkombinationen verwendet werden, die eine große exzentrische Masse aufweisen, da diese ebenfalls bei einem Verdrehen exakt ausgerichtet werden können. Die Anordnung des konusförmigen Abschnitts mit einem Abstand zu dem Lagerelement in der Rastposition führt dazu, dass der Drehteller am Kupplungsteil präzise angelegt werden kann und keine Gegenkräfte und mechanische Spannungen durch den Zentrierzapfen erzeugt werden. Dies gilt insbesondere in Verbindung mit einer Rastung, wie sie oben bereits beschrieben ist.

In einer weiteren Ausgestaltung ist eine Steuereinheit vorgesehen, die eine sprungartige Bewegung des Tastkopfes und/oder des Kupplungsteils bewirkt, die das Tastwerkzeug aus einer zum Kupplungsteil beabstandeten Position in eine zum Kupplungsteil nahe Position verlagert.

In dieser Ausgestaltung wird die Massenträgheit des Tastwerkzeuges dazu ausgenutzt, diesen derart zu dem Kupplungsteil zu verlagern, dass das Kupplungsteil das Tastwerkzeug fixieren kann. Ein Fixieren des Tastwerkzeuges wird vorzugsweise mittels eines elektrischen Magneten herbeigeführt, der an und/oder im Kupplungsteil angeordnet ist. Daraus ergibt sich die Möglichkeit, den Drehteller in den Wirkbereich des Magneten zu bewegen, um ihn an dem Kupplungsteil zu befestigen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Koordinatenmessgerät gemäß einem Ausführungsbeispiel der vorliegenden Erfindung,
- Fig. 2: eine vereinfachte Darstellung eines Tastkopfes mit einer Tastkopfsensorik und einem Messkraftgenerator,
- Fig. 3: ein bevorzugtes Ausführungsbeispiel des Tastkopfes für das Koordinatenmessgerät aus Fig. 1 in einer Ansicht auf die Wechselschnittstelle,
- Fig. 4: den Tastkopf aus Fig. 3 in einer Schnittansicht entlang der Linie III-III,
- Fig. 5: ein bevorzugtes Ausführungsbeispiel eines Tastwerkzeuges für das Koordinatenmessgerät aus Fig. 1 in einer Draufsicht auf die Wechselschnittstelle,
- Fig. 6: ein weiteres Ausführungsbeispiel eines Tastwerkzeuges für das Koordinatenmessgerät aus Fig. 1 in einer Draufsicht auf die Wechselschnittstelle,
- Fig. 7: eine vereinfachte Darstellung eines Tastkopfes beim Verdrehen des Tastwerkzeugs,
- Fig. 8 -10: das Kupplungsteil des Tastkopfes aus Fig. 3 in verschiedenen Betriebspositionen in einer Schnittansicht,
- Fig. 11-12: ein Ausführungsbeispiel eines Zentrierzapfens in verschiedenen Betriebspositionen in einer Schnittansicht.

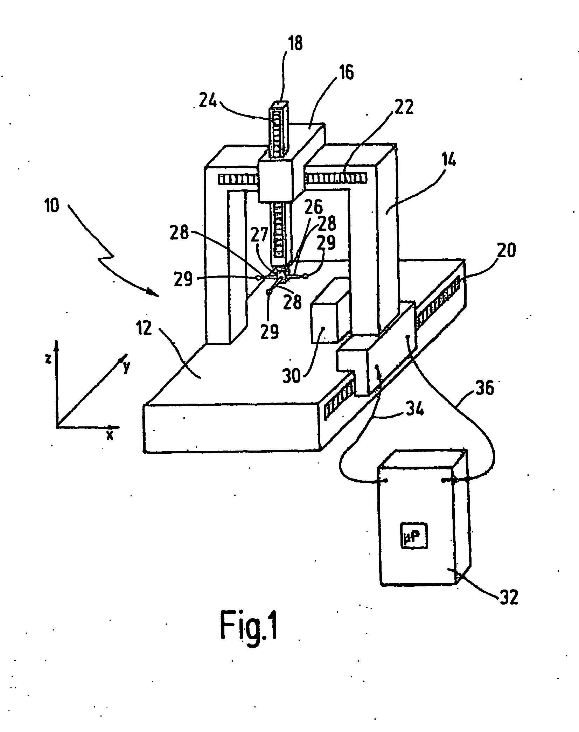

In Fig. 1 ist ein Ausführungsbeispiel des neuen Koordinatenmessgerätes in seiner Gesamtheit mit der Bezugsziffer 10 bezeichnet. Das Koordinatenmessgerät 10 besitzt hier eine Basis 12, auf der ein Gestellaufbau 14 in Längsrichtung verschieblich angeordnet ist. Die Bewegungsrichtung des Gestellaufbaus 14 relativ zu der Basis 12 wird üblicherweise als γ-Achse bezeichnet. Am oberen Querträger des Gestellaufbaus 14 ist ein Schlitten 16 angeordnet, der in Querrichtung verschieblich ist. Die Querrichtung wird üblicherweise als x-Achse bezeichnet. Der Schlitten 16 trägt eine Pinole 18, die in z-Richtung, also senkrecht zu der Basis 12, verfahren werden kann. Mit den Bezugsziffern 20, 22, 24 sind Messeinrichtungeri bezeichnet, anhand derer die Position des Gestellaufbaus 14, des Schlittens 16 und der Pinole 18 bestimmt werden kann. Typischerweise handelt es sich bei den Messeinrichtungen 20, 22, 24 um Glasmaßstäbe, die mit Hilfe geeigneter Sensoren abgelesen werden.

Am unteren freien Ende der Pinole 18 ist ein Tastkopf 26 angeordnet, der ein Tastwerkzeug 27 hält. Das Tastwerkzeug 27 weist hier drei Taststifte 28 auf, die jeweils an ihren freien Enden eine Tastkugel 29 besitzen. Diese dient dazu, einen Messpunkt an einem Messobjekt 30 anzutasten. Mit Hilfe der Messeinrichtungen 20, 22, 24 lässt sich die Position des Tastkopfes 26 innerhalb des Messvolumens beim Antasten des Messpunktes bestimmen. In Abhängigkeit davon kann man dann die Raumkoordinaten des angetasteten Messpunktes bestimmen.

Mit der Bezugsziffer 32 ist eine Auswerte- und Steuereinheit bezeichnet, die über Leitungen 34 und 36 mit den Antrieben und Sensoren am Gestellaufbau verbunden ist. Die Steuereinheit 32 dient dazu, die motorischen Antriebe für die Bewegungen des Tastkopfes 26 entlang der drei Koordinatenachsen x, y und z anzusteuern. Außerdem liest die Auswerte- und Steuereinheit 32 hier die Messwerte aus den Messeinrichtungen 20, 22, 24 ein, und sie bestimmt in Abhängigkeit davon und in Abhängigkeit von den Auslenkungen mindestens eines der Taststifte 28 die aktuellen Raumkoordinaten des Messpunktes und gegebenenfalls weitere geometrische Größen des Messobjektes 30.

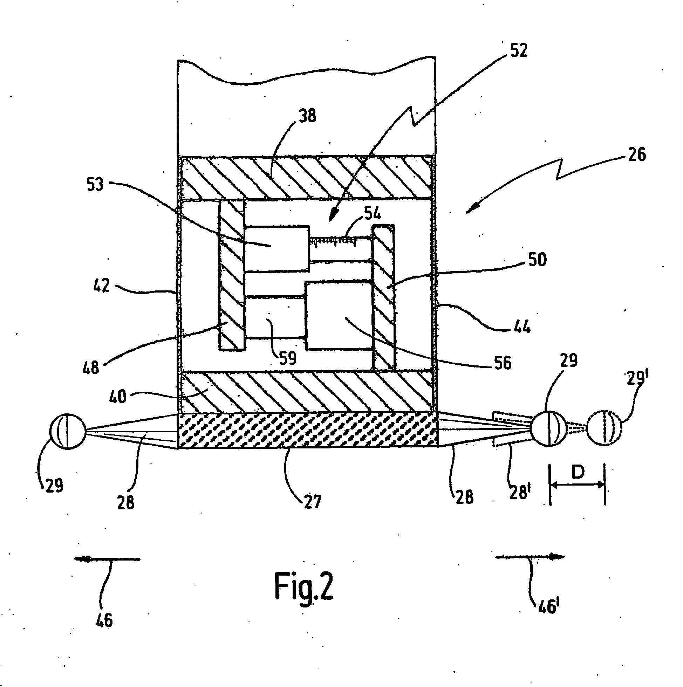

Fig. 2 zeigt anhand einer vereinfachten, schematischen Darstellung die grundlegende Funktionsweise des Tastkopfes 26. Der Tastkopf 26 besitzt ein Rumpfteil 38 und ein Kupplungsteil 40, die über zwei Blattfedern 42 und 44 miteinander verbunden sind. Die Blattfedern 42, 44 bilden ein Federparallelogramm, das eine Bewegung des Kupplungsteils 40 in Richtung des Pfeils 46 (und zurück in Richtung des Pfeils 46') ermöglicht. Damit kann das Tastwerkzeug 27 mit den Taststiften 28 um eine Distanz D aus seiner Ruhelage ausgelenkt werden. Bei den Bezugsziffern 28' und 29' ist einer der Taststifte 28 mit der Tastkugel 29 in der ausgelenkten Position gezeigt.

Die Auslenkung des Tastwerkzeuges 27 relativ zu dem Rumpfteil 38 kann die Folge einer Antastung des Messobjektes 30 an einem Messpunkt sein. Vorteilhafterweise wird die Auslenkung des Tastwerkzeuges 27 bei der Bestimmung der Raumkoordinaten berücksichtigt. Darüber hinaus kann die Auslenkung des Tastwerkzeuges 27 in den bevorzugten Ausführungsbeispielen mit Hilfe eines Messkraftgenerators 56 erzeugt werden, wie nachfolgend näher erläutert ist. An dem Rumpfteil 38 und an dem beweglichen Teil 40 ist jeweils ein Schenkel 48, 50 angeordnet. Die Schenkel 48, 50 stehen hier parallel zu den Blattfedern 42, 44. Zwischen den Schenkeln 48, 50 sind hier ein Detektor 52 (hier mit einer Skala 54 dargestellt) und der Messkraftgenerator 56 angeordnet. Der Detektor 52 weist hier eine Messspule 53 in Form einer Tauchspule auf. Als Detektor 52 sind alternativ oder ergänzend ein Hall-Sensor, ein piezoresistiver Sensor oder ein anderer Sensor denkbar, mit dessen Hilfe die räumliche Auslenkung des Tastwerkzeuges 27 relativ zu dem Rumpfteil 38 bestimmt werden kann. Der Messkraftgenerator 56 ist hier ebenfalls als Tauchspule ausgebildet. Mit deren Hilfe können die beiden Schenkel 42 und 50 zueinander gezogen oder auseinandergedrückt werden, indem ein Kern 59 angezogen oder abgestoßen wird.

In der vereinfachten Darstellung in Fig. 2 ermöglicht der Tastkopf 26 lediglich eine Auslenkung des Tastwerkzeuges 27 in Richtung des Pfeils 46. Den einschlägigen Fachleuten ist allerdings bekannt, dass ein solcher Tastkopf 26 typischerweise eine entsprechende Auslenkung in zwei weiteren, orthogonalen Raumrichtungen ermöglicht. Die Erfindung ist jedoch nicht auf diesen speziellen Tastkopf beschränkt und kann auch mit anderen Tastköpfen realisiert werden, welche ein Rumpfteil 38 sowie ein relativ dazu bewegliches Kupplungsteil 40 besitzen.

Den einschlägigen Fachleuten ist bekannt, dass ein Tastkopf 26 der in Fig. 2 stark vereinfacht dargestellten Art in der Regel eine Aufnahme besitzt, an der das Tastwerkzeug 27 auswechselbar befestigt ist.

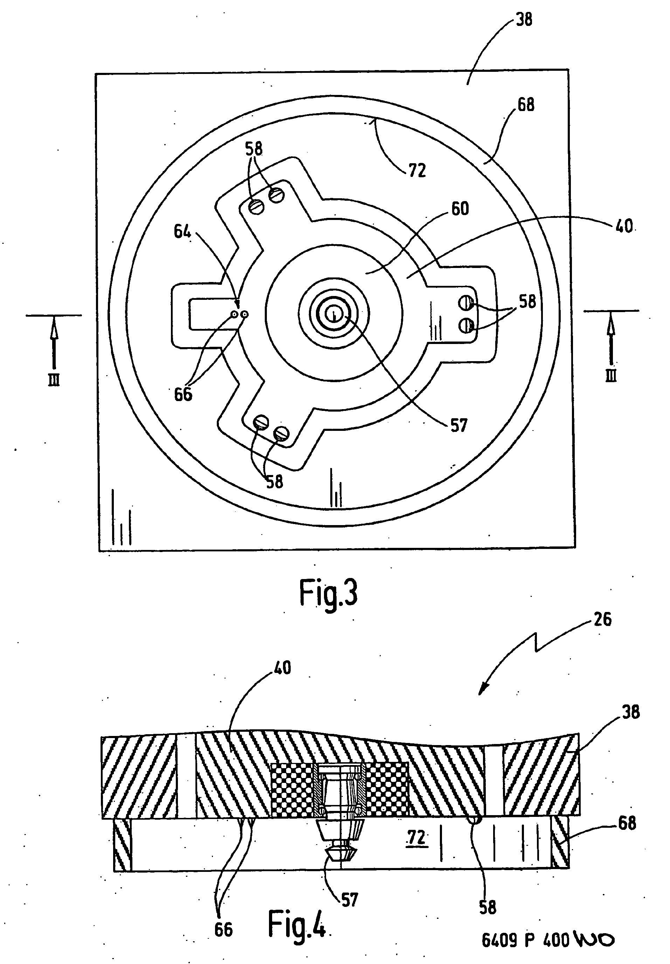

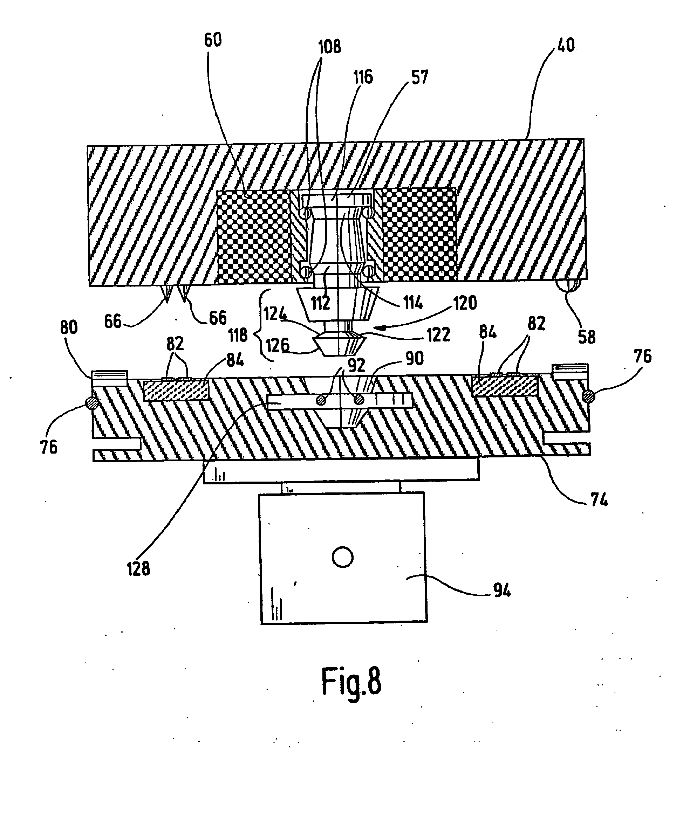

Fig. 3 zeigt ein bevorzugtes Ausführungsbeispiel des Tastkopfes 26 aus Fig. 1 in einer Ansicht von unten. Das Rumpfteil 38 hält das Kupplungsteil 40, welches beweglich an dem Rumpfteil 38 befestigt ist. Das Kupplungsteil 40 weist einen Zentrierzapfen 57 auf, der in dem Kupplungsteil 40 mit einer Bewegungsrichtung senkrecht zu der Bewegungsrichtung 46 beweglich geführt ist (wird anhand Fig. 8 bis 10 erläutert). Im Randbereich des Kupplungsteils 40 sind paarweise Rastkugeln 58 angeordnet. Die paarweise Anordnung ist so gewählt, dass die Rastkugelpaare jeweils den gleichen radialen Abstand zu dem Zentrierzapfen 57 besitzen. Ferner sind die paarweise angeordneten Rastkugeln 58 gleichmäßig zueinander am Umfang des Kupplungsteils 40 verteilt. Das Kupplungsteil 40 besitzt ferner einen Magneten 60, hier in Form eines ringförmigen Elektromagneten. Der Elektromagnet ist konzentrisch zu dem Zentrierzapfen 57 an dem Kupplungsteil 40 angeordnet. Darüber hinaus besitzt das Kupplungsteil 40 einen Sensor 64, hier mit zwei Kontakten 66. Am Rumpfteil 38 ist ein Abrollvorsprung 68 in Form eines Kreisrohres mit einem Rohrinnenmantel 72 ausgebildet.

Fig. 4 zeigt einen Schnitt des Tastkopfes 26 der Fig. 3 entlang einer Schnittlinie III-III. Aus Gründen der Übersichtlichkeit sind den Kontakten 66 zugehörige Leitungen, Halterungen und Federungen nicht dargestellt.

Fig. 4 zeigt die Ausgestaltung des Abrollvorsprungs 68 als Kreisrohr mit einer Erstreckung konzentrisch zu dem Zapfen 57, woraus sich der Rohrinnenmantel 72 ergibt.

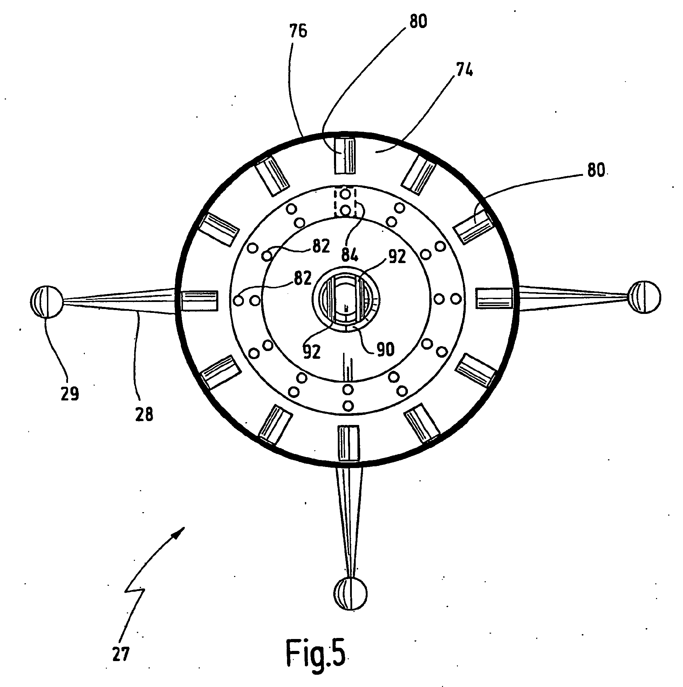

Fig. 5 zeigt ein bevorzugtes Ausführungsbeispiel des Tastwerkzeuges 27 in einer Draufsicht. Das Tastwerkzeug 27 besitzt einen Drehteller 74, der hier kreisförmig ausgebildet ist. In Umfangsrichtung um den Drehteller 74 ist ein Traktionselement 76 in Form eines O-Rings angeordnet. Der Drehteller 74 besitzt mehrere Rastwalzen 80, die radial zu dem Drehteller 74 drehbar angeordnet sind. Die Rastwalzen 80 sind am Umfang des Drehtellers 74 mit gleichmäßigen Abständen verteilt. Radial innen zu jeder Rastwalze 80 sind zwei Kontakte 82 angeordnet. Die Kontakte 82 liegen hier in radialer Richtung des Drehtellers 74 hintereinander, wodurch sich eine am Umfang verteilte Anordnung von Kontaktpaaren ergibt. Jedes Paar ist Teil eines Ausrichtungsbestimmungselements 84 (siehe auch Fig. 8). Aus Gründen der Übersichtlichkeit wurde lediglich eines der Ausrichtungsbestimmungselemente 84 gestrichelt dargestellt. Die Ausrichtungsbestimmungselemente 84 sind hier mit elektrischen Identifikationsschaltkreisen in Form von integrierten Schaltkreisen ausgebildet. Jeder Identifikationsschaltkreis repräsentiert eine eindeutige Information darüber, an welcher Position er sich an dem Drehteller 74 befindet. Anhand dieser Information kann die Position des Drehtellers 74 in Umfangsrichtung erkannt werden. Ferner enthält zumindest ein Identifikationsschaltkreis Informationen, die die Identität des Tastwerkzeuges 27 repräsentiert. Im Mittelpunkt des Drehtellers 74 ist eine Aufnahme 90 in Form einer kreisförmigen Aussparung vorgesehen. Innerhalb der Aufnahme 90 sind zwei Verriegelungselemente 92 angeordnet.

Das Tastwerkzeug 27 wird hier an dem Tastkopf 26 aus Fig. 3 und 4. eingesetzt. Zu diesem Zweck ist die Aufnahme 90 derart ausgebildet, dass sie das untere freie Ende des Zentrierzapfens 57 aufnehmen kann und mittels der Verriegelungselemente 92 arretieren kann.

Die Kontakte 82 sind so ausgerichtet, dass sie jeweils paarweise mit den Kontakten 66 des Tastkopfes 26 (Fig. 3) zusammenwirken können. Das bedeutet, dass beim Anordnen des Tastwerkzeuges 27 am Tastkopf 26 ein elektrischer Kontakt zwischen den Kontakten 66 und zwei Kontakten 82 hergestellt wird. Auf diese Weise ist es möglich, die Informationen aus genau einem Identifikationsschaltkreis auszulesen.

Das Tastwerkzeug 27 trägt hier die drei Taststifte 28 entsprechend Fig. 1. Die Taststifte 28 sind unterhalb des Drehtellers 74 angeordnet. Dabei ist die Ausbildung des Tastwerkzeuges nicht auf die in Fig. 5 gezeigte Weise beschränkt. Es ist möglich, Taststifte unterschiedlicher Länge und/oder Geometrien zu verwenden. Auch die Zahl der verwendeten Taststifte ist variierbar.

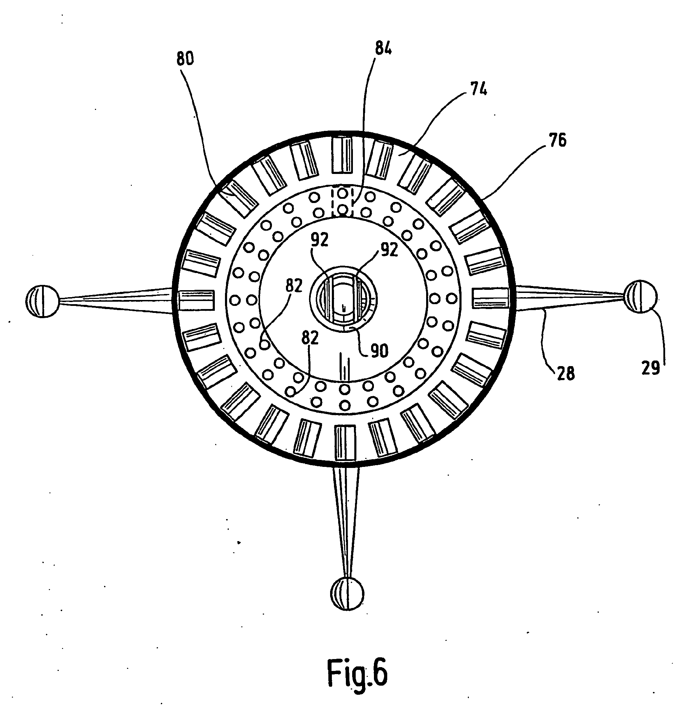

Fig. 6 zeigt ein alternatives Tastwerkzeug 27. Im Vergleich zu dem Tastwerkzeug der Fig. 5 sind weitere Rastwalzen 80 und dazugehörige Kontakte 82 und Ausrichtungsbestimmungselemente 84 an dem Drehteller 74 angeordnet.

Bei Verwendung der Tastwerkzeuge 27 aus Fig. 5 und 6 an dem Tastkopf 26 der Fig. 3 und 4 bilden die Rastkugeln 58 mit den Rastwalzen 80 eine Rastung. Die Rastung erzeugt einen sicheren und reproduzierbaren Sitz, sobald die Rastwalzen 80 zwischen den paarweise angeordneten Rastkugeln 58 einrasten. Aufgrund der Ausgestaltung des Kupplungsteils 40 werden jeweils drei Rastwalzen 80 des Tastwerkzeuges 27 von jeweils einem Paar der Rastkugeln 58 in Umfangsrichtung des Drehtellers 74 fixiert, wodurch sich eine Dreipunktlagerung ergibt. Die Kontakte 82 der Ausrichtungsbestimmungselemente 84 sind derart angeordnet, dass sie bei korrektem Einrasten ein Auslesen der Ausrichtungsbestimmungselemente 84 ermöglichen.

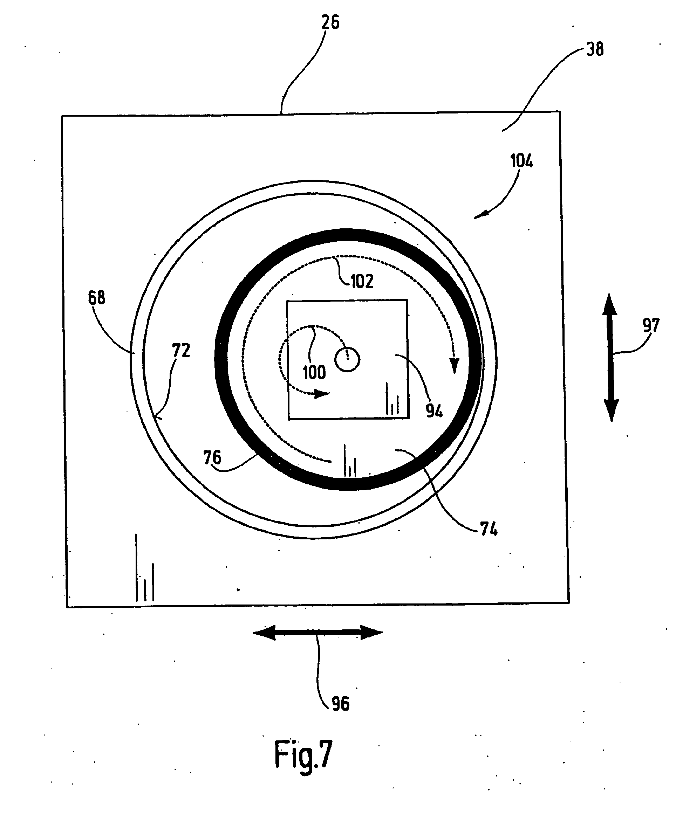

Fig. 7 zeigt den Tastkopf 26 aus Fig. 3 oder 4 sowie den Drehteller 74 aus Fig. 5 in einer vereinfachten Darstellung von unten. Der Tastkopf 26 ist hier lediglich mit der Außenkontur des Rumpfteils 38 und dem Abrollvorsprung 68 gezeigt. Der Drehteller 74 ist hier mit einem Aufnahmeblock 94 für Taststifte 28 und dem Traktionselement 76 gezeigt. Zum Bewegen des Drehtellers 74 relativ zum Tastkopf werden hier die Messkraftgeneratoren 56 verwendet, die Messkräfte in Richtung der Doppelpfeile 96 und 97 erzeugen. Die Richtungen 96 und 97 sind orthogonal zueinander und entsprechend hier den Bewegungsrichtungen x und y des Koordinatenmessgerätes 10. Mit Hilfe dieser Messkräfte ist es möglich, den Drehteller 74 innerhalb des Abrollvorsprungs 68 zu bewegen. In der dargestellten Position liegt der Drehteller 74 mit dem Traktionselement 76 an dem Rohrinnenmantel 72 an und bildet einen Reibschluss an dem Abrollvorsprung 68.

Durch eine kreisförmige Bewegung (Pfeil 100) des Drehtellers 74, die hier konzentrisch zum Abrollvorsprung 68 erfolgt, wird ein Verdrehen des Drehtellers 74 in Richtung des Pfeils 102 erreicht. Die kreisförmige Bewegung wird durch entsprechende Steuerung der Messkräfte entlang der Pfeile 96 und 97 erzeugt. Die Bewegung 102 wird so lange ausgeführt, bis der Taststift die gewünschte Drehposition besitzt. Anschließend kann der Drehteller 74 in seine zentrale Ruheposition zurückbewegt werden. Vorzugsweise liegt die Ruheposition zentrisch zum Abrollvorsprung 68. Aufgrund der unterschiedlichen Radien des Abrollvorsprungs und des Traktionselementes 76 bilden diese Elemente ein Reibgetriebe 104, das bei entsprechender Dimensionierung die Drehgeschwindigkeit des Drehtellers 74 bestimmt.

Fig. 8 zeigt eine Schnittansicht des Kupplungsteils 40 aus Fig. 4 und des Drehtellers 74 aus Fig. 5 in einer ersten Betriebsposition.

Das Kupplungsteil 40 weist den Ringmagneten 60 auf, der eine Haltevorrichtung 106 konzentrisch umgibt. Die Haltevorrichtung 106 besitzt hier zwei Lagerelemente 108 in Form von Kugellagern, die ringförmig ausgeführt und konzentrisch zu dem Zentrierzapfen 57 angeordnet sind.

Innerhalb der Haltevorrichtung 106 ist der Zentrierzapfen 57 angeordnet, welcher zwei konusförmige Abschnitte 112 und 114 besitzt. In der dargestellten Position des Zentrierzapfens 57 liegen die konusförmigen Abschnitte 112, 114 spielfrei an den Lagerelementen 108 an. Das innerhalb des Kupplungsteils 40 liegende Ende des Zentrierzapfens 57 bildet ein Haltevorsprung 116, der den Zentrierzapfen 57 innerhalb der Haltevorrichtung 106 gegen hohe Zugkräfte sichert. Der außerhalb des Kupplungsteils 40 liegende Abschnitt 118 ist im Wesentlichen konusförmig ausgebildet. Der Abschnitt 118 weist eine Nut 120 auf, welche in Umfangsrichtung des Zentrierzapfens 57 ausgebildet ist. Die zum Kupplungsteil 40 zeigende Wand 122 der Nut 120 bildet einen weiteren konusförmigen Abschnitt 124, welcher entgegengesetzt zu den konusförmigen Abschnitten 112 und 114 orientiert ist. Das freie Ende des Zentrierzapfens 57 bildet einen weiterer konusförmiger Abschnitt 126, dessen Orientierung der Orientierung der konusförmigen Abschnitte 112, 114 entspricht. Ferner sind hier eine der Rastkugeln 58 sowie die Kontakte 66 zu sehen.

Der Drehteller 74 trägt das Traktionselement 76 in Form des O-Rings. Auf der dem Kupplungsteil 40 zugewandten Seite des Drehtellers 74 sind zwei Rastwalzen 80 sowie zwei Ausrichtungsbestimmungseleinente 84 dargestellt. Die Aufnahme 90 ist im Wesentlichen konusförmig ausgebildet, so dass ein sicherer Sitz des Zentrierzapfens 57 innerhalb der Aufnahme 90 und eine automatische Zentrierung gewährleistet sind. Innerhalb der Aufnahme 90 ist eine zylinderförmige Aussparung 128, innerhalb der die Verriegelungselemente 92 bewegt werden können. Der Drehteller 74 hält den Aufnahmeblock 94. Taststifte 28 sind aus Gründen der Übersichtlichkeit nicht dargestellt.

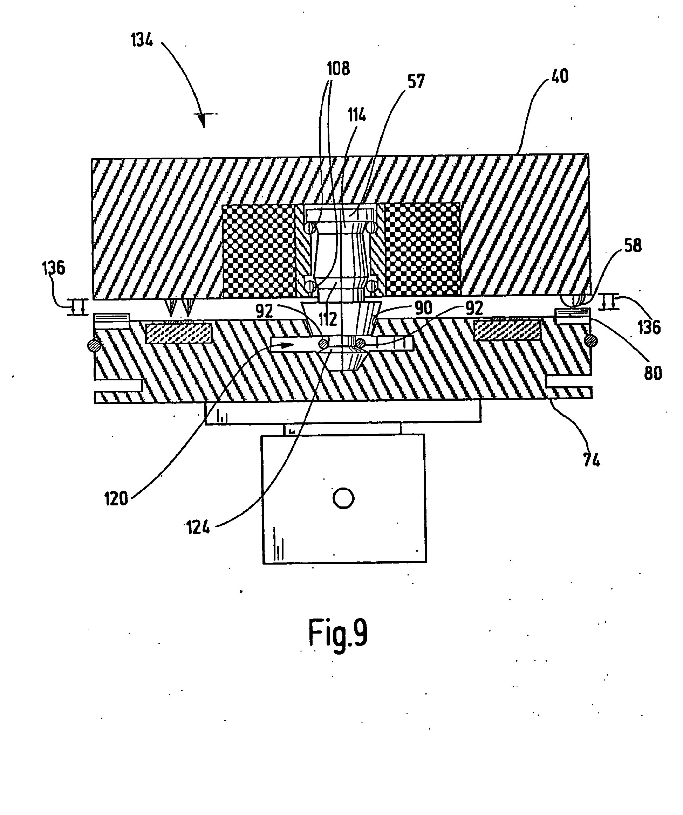

Fig. 9 zeigt das Kupplungsteil 40, den Zentrierzapfen 57 und den Drehteller 74 in einer zweiten Betriebsposition. Im Unterschied zur Fig. 8 ist der Drehteller 74 hier an dem Zentrierzapfen 57 befestigt. Zu diesem Zweck ist der Zentrierzapfen 57 in die Aufnahme 90 eingesteckt, so dass die Verriegelungselemente 92 in die Nut 120 eingreifen. Somit bildet der konusförmige Abschnitt 124 eine Anlage für die Verriegelungselemente 92, und die Nut 120 bildet mit den Verriegelungselementen 92 einen Verschluss.

In der hier dargestellten Position des Drehtellers 74 verbleibt ein Abstand zwischen der Rastkugel 58 und der nächstliegenden Rastwalze 80. Daher ist es möglich, den Drehteller 74 um den Zentrierzapfen 57 herum zu drehen. Dabei liegen die konusförmigen Abschnitte 112 und 114 spielfrei an den Lagerelementen 108 an. Somit befindet sich der Zentrierzapfen 57 in einer Drehposition 134, die ein Drehen des Drehtellers 74 ermöglicht.

Durch eine ruckartige Bewegung des Kupplungsteils 40 in Richtung der Bewegungspfeile 136 (also in Längsrichtung des Zapfens) wird erreicht, dass der Drehteller 74 aus der in Fig. 9 gezeigten, beabstandeten Position in eine zum Kupplungsteil 40 nahe Position verlagert wird. Eine derartige ruckartige Bewegung wird durch die Steuereinheit 32 bewirkt, indem es den Tastkopf 26 abrupt nach unten verfahren wird.

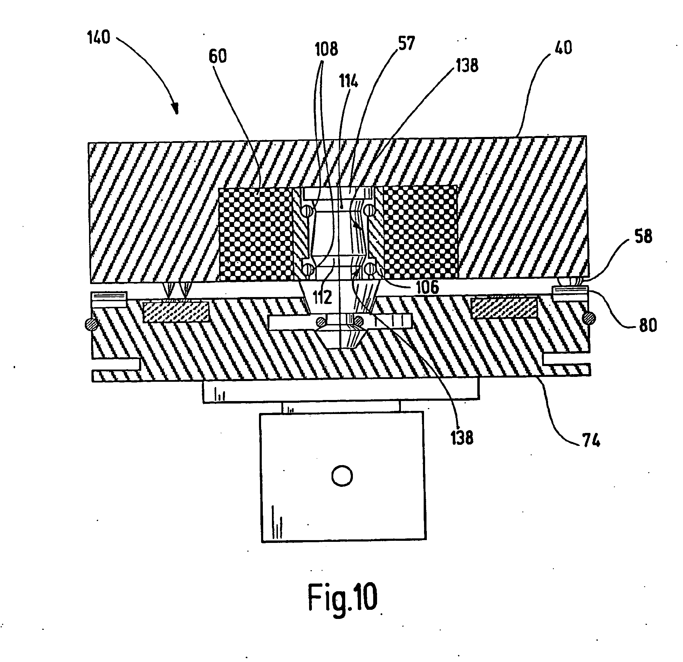

Fig. 10 zeigt das Kupplungsteil 40, den Zentrierzapfen 57 und den Drehteller 74 aus Fig. 8 und 9 in einer entsprechenden dritten Betriebsposition. Außerdem ist nun der Elektromagnet 60 magnetisiert, um den Drehteller 74 in der zum Kupplungsteil 40 nahen Position zu fixieren. In dieser nahen Position wirken die Rastkugeln 58 mit der nächstliegenden Rastwalze 80 zusammen, was ein Einrasten des Drehtellers 74 in einer definierten Position bewirkt.

Durch ein Hochschieben des Zentrierzapfens 57 sind die konusförmigen Abschnitte 112 und 114 nun mit einem Abstand 138 zu den Lagerelementen 108 angeordnet. Aufgrund dieser Abstände 138 besitzt der Zentrierzapfen 57 innerhalb der Haltevorrichtung 106 Spiel. Auf diese Weise wird verhindert, dass durch den Zentrierzapfen 57 Gegenkräfte erzeugt werden, welche gegen die Ausrichtung des Drehtellers 74 durch die Rastung wirken. Somit befindet sich der Zentrierzapfen 57 in einer Rastposition 140. In dieser wird ein reproduzierbareres Rasten mit hochgenauer Lage des Drehtellers 74 zum Kupplungsteil 40 erreicht.

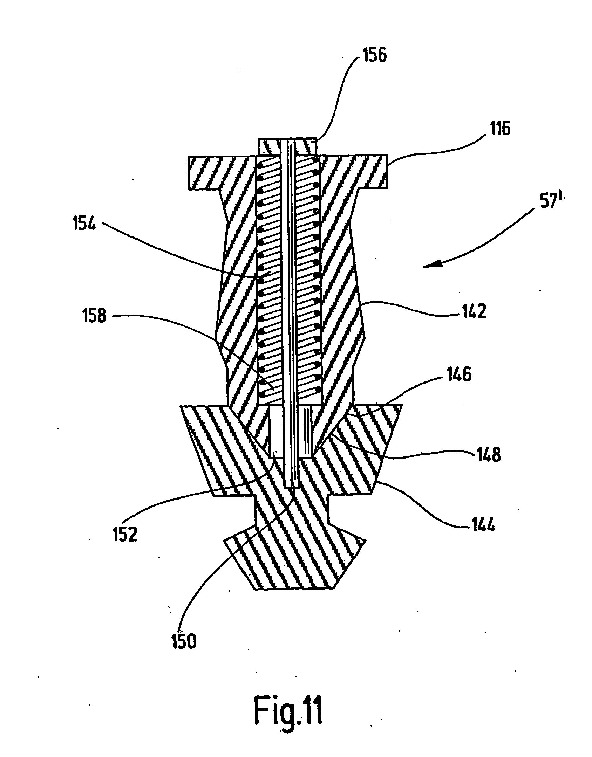

Fig. 11 zeigt eine weitere Ausgestaltung des Zentrierzapfens 57' in einem Schnitt. Der Zentrierzapfen 57' ist hier mehrteilig ausgebildet und besteht aus einem Ankerteil 142 und einem Kupplungselement 144. Das Ankerteil 142 besitzt ein konusförmiges Ende 146, das hier in einer kegelstumpfförmigen Ausnehmung 148 sitzt. Das Kupplungsteil 144 ist mit einem Seil 150 fest verbunden, das sich durch eine Öffnung 152 am Ende 146 und einen Federraum 154 durch das Ankerteil 142 erstreckt. Das Seil 150 im Bereich des Haltevorsprungs 116 am oberen Ende des Ankerteils 142 mit einer Sicherungsscheibe 156 verbunden. Innerhalb eines Federraums 154 ist eine Schraubenfeder 158 angeordnet, die eine Federkraft zwischen dem Ankerteil 142 und der Sicherungsscheibe 156 bewirkt. Auf diese Weise wird das Kupplungselement 144 an dem Ankerteil 142 gehalten. Die Sicherungsscheibe 156 ist so ausgebildet, dass sie bei Krafteinwirkung in den Federraum 154 hineingezogen werden kann.

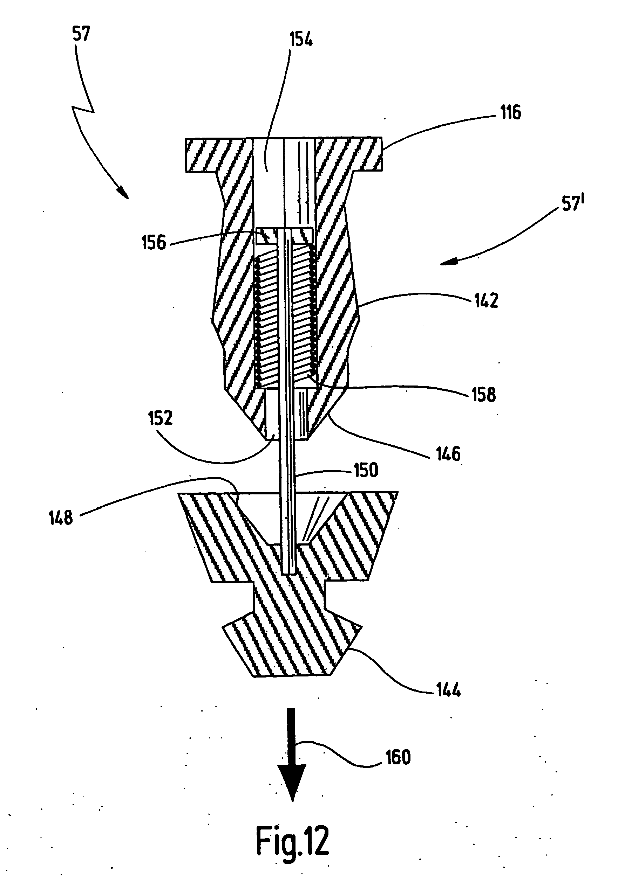

Fig. 12 zeigt den Zentrierzapfen 57' in einer zweiten Position. Die zweite Position ist die Folge einer Krafteinwirkung auf das Kupplungselement 144 in Richtung des Pfeils 160. Durch diese Krafteinwirkung wird die Sicherungsscheibe 156 an dem Seil 150 in den Federraum 154 hineingezogen, wobei sie die Schraubenfeder 158 komprimiert.

Die Ausführungsform gemäß Fig. 11 und 12 wirkt als Sicherungselement. Bei Verwendung dieses Zentrierzapfens 57' mit einem Tastwerkzeug 27 wird erreicht, dass im Falle einer zu hohen Krafteinwirkung auf das Tastwerkzeug 27 dieses von dem Tastkopf 26 weg bewegt werden kann. Insbesondere im Falle einer Kollision des Tastwerkzeuges 27 mit dem Messobjekt 30 oder einem anderen Hindernis werden Schäden am Tastwerkzeug 27 und am Tastkopf 26 vermindert oder ganz verhindert. Zudem besteht die Möglichkeit, dass bei Erkennen der Kollision ein zusätzlicher Zeitraum zum Abbremsen des Tastkopfes 26 gewonnen wird, da das Tastwerkzeug 27 ausgelenkt werden kann.

Zum Lösen des Drehtellers 74 von dem Zentrierzapfen 57 müssen die Verriegelungselemente 92 aus der Nut 120 herausbewegt werden. Zu diesem Zweck ist eine hier nicht dargestellte Vorrichtung vorgesehen, die von außen zugänglich ist und so ein manuelles als auch ein automatisiertes Bewegen der Verriegelungselemente 92 ermöglicht.

In weiteren Ausführungsformen ist es denkbar, eine Winkelteilung für Positionen der Taststifte virtuell zu verfeinern. Hierzu wird eine geeignete Anzahl an äquidistanten Rastpositionen gewählt. Weiter werden an dem Tastkopf mehrere - vorzugsweise gleichartig ausgebildete - Taststifte radial zu einem gemeinsamen Mittelpunkt angeordnet. Eine Winkelteilung zwischen den Taststiften (in Umfangsrichtung um den Mittelpunkt) wird so gewählt, dass sich die Winkelteilung der Taststifte von der Winkelteilung der Rastposition unterscheidet und kein Vielfaches davon bildet. So wird erreicht, dass die Taststifte auf einer Vielzahl von Winkelpositionen angeordnet werden können. Da die Winkelpositionen in umfänglicher Richtung, also in Drehrichtung des Tastkopfs, nicht direkt aufeinanderfolgend angeordnet sind, ist es von Vorteil, wenn einem Steuergerät die entsprechenden Tastkopfpositionen in Verbindung mit den jeweiligen Winkelstellungen der Taststifte mitgeteilt werden. So ist es möglich, dass einem Anwender eine verfeinerte Winkelteilung zur Verfügung gestellt werden kann und durch Auswahl der entsprechenden Winkelteilung der Tastkopf automatisch in die korrekte Position gedreht wird.

In einer Ausführungsform ist es vorgesehen, dass der Tastkopf 24 äquidistante Rastpositionen aufweist. Diese sind dann in einem 15°-Winkel zueinander um einen gemeinsamen Mittelpunkt angeordnet. Bei Verwendung von drei äquidistanten Taststiften ergibt sich eine Winkelteilung von 120° für die Taststifte zueinander. Aufgrund der gleichen Ausgestaltung der Taststifte und dem Verhältnis zwischen der Winkelteilung der Rastpositionen und der Winkelteilung der Taststifte ergibt sich eine virtuelle Winkelteilung von 5°. Insgesamt kann also ein benötigter Taststift nicht nur in den 24 ursprünglichen Positionen angeordnet werden, sondern die drei Taststifte können zusammengenommen in 72 unterschiedlichen Positionen angeordnet werden.

Das Grundprinzip kann mit unterschiedlichen Einteilungen erfolgen. Bevorzugte Beispiele sind: drei äquidistante Rastpositionen in Verbindung mit vier äquidistanten Taststiften, woraus sich eine virtuelle 30°-Teilung ergibt; drei Rastpositionen in Verbindung mit fünf Taststiften, woraus sich eine virtuelle 24°-Teilung ergibt und sechs Rastpositionen in Verbindung mit einem Sternentaster, woraus sich eine 15°-Teilung ergibt.

Ferner ergibt sich die Möglichkeit, auch unterschiedliche Taststifte einzusetzen, wobei seitens des Steuergerätes Umrechnungsmodell bereitgestellt werden sollten.

Durch die virtuelle Rastung wird die Anzahl benötigter Taststifte gering gehalten, so dass ein Kalibrieraufwand minimiert ist.

Insgesamt wird somit eine höhere Flexibilität beim Einsatz des entsprechenden Tastkopfs ermöglicht.

## Patentansprüche

1. Tastkopfsystem für ein Koordinatenmessgerät (10) zum Bestimmen von Raumkoordinaten an einem Messobjekt (30), mit einem eine Tastkopfsensorik (53) aufweisenden Tastkopf (26), der ein Rumpfteil (38) und ein relativ zum Rumpfteil (38) bewegliches Kupplungsteil (40) besitzt, an dem ein Tastwerkzeug (27) angeordnet ist wobei das Tastwerkzeug (27) mindestens einen Taststift (28) zum Antasten des Messobjektes (30) und einen Drehteller (74) aufweist, über den der Taststift (28) drehbar an das Kupplungsteil (40) angekoppelt ist, **dadurch gekennzeichnet, dass** am Rumpfteil (38) mindestens ein Abrollvorsprung (68) ausgebildet ist, an dem der Drehteller (74) durch eine Bewegung des Kupplungsteils (40) abrollbar ist.

2. Tastkopfsystem nach Anspruch 1, **dadurch gekennzeichnet, dass** die Tastkopfsensorik (53) mindestens einen Messkraftgenerator (56) aufweist, der die Bewegung des Kupplungsteils (40) bewirkt.

3. Tastkopfsystem nach Anspruch 1 oder 2, **dadurch gekennzeichnet, dass** der Abrollvorsprung (68) ein den Drehteller (74) umschließendes Kreisrohr (68) ist.

4. Tastkopfsystem nach einem der vorhergehenden Ansprüche, **gekennzeichnet durch** mindestens ein Traktionselement (76), insbesondere einen O-Ring (76), das zwischen dem Drehteller (74) und dem Abrollvorsprung (68) angeordnet ist.

5. Tastkopfsystem nach einem der vorhergehenden Ansprüche, **dadurch gekennzeichnet, dass** der Tastkopf (26) mit dem Tastwerkzeug (27) eine Ausrichtungserfassungsvorrichtung (84) zum Erfassen der Ausrichtung des Drehtellers (74) in Drehrichtung bildet.

6. Tastkopfsystem nach Anspruch 5, **dadurch gekennzeichnet, dass** die Ausrichtungserfassungsvorrichtung (84) mehrere Ausrichtungsbestimmungselemente (84), insbesondere elektrische Identifikationsschaltkreise (84), besitzt, die jeweils einer bestimmten Ausrichtung des Tastwerkzeuges (27) zugeordnet sind, und mindestens einen Sensor (64) besitzt, der mit den Ausrichtungsbestimmungselementen (84) zusammenwirkt.

7. Tastkopfsystem nach Anspruch 6, **dadurch gekennzeichnet, dass** die Ausrichtungsbestimmungselemente (84) in der Drehrichtung des Drehtellers (74) winkelversetzt zueinander angeordnet sind.

8. Tastkopfsystem nach Anspruch 6 oder 7, **dadurch gekennzeichnet, dass** die Ausrichtungsbestimmungselemente (84) jeweils mindestens zwei Kontakte (82) aufweisen, die radial zu der Drehrichtung des Drehtellers (74) aufeinanderfolgend angeordnet sind.

9. Tastkopfsystem nach einem der vorhergehenden Ansprüche, **gekennzeichnet durch** einen am Kupplungsteil (40) beweglich angeordneten Zentrierzapfen (57), mit dem das Tastwerkzeug (27) am Kupplungsteil (40) angekoppelt ist.

10. Tastkopfsystem nach Anspruch 9, **dadurch gekennzeichnet, dass** der bewegliche Zentrierzapfen (57) mindestens eine Rastposition (140) und mindestens eine Drehposition (134) aufweist.

11. Tastkopfsystem nach Anspruch 9 oder 10, **dadurch gekennzeichnet, dass** der Zentrierzapfen (57) mindestens einen konusförmigen Abschnitt (112, 114) aufweist, der mit mindestens einem Lagerelement (108) zusammenwirkt.

12. Tastkopfsystem nach Anspruch 11, **dadurch gekennzeichnet, dass** der konusförmige Abschnitt (112, 114) in der Drehposition (134) durch das Lagerelement (108) spielfrei gelagert ist und in der Rastposition (140) mit einem Abstand (138) zu dem Lagerelement (108) angeordnet ist.

13. Tastkopfsystem nach einem der vorhergehenden Ansprüche, **gekennzeichnet durch** eine Steuereinheit (32), die eine sprungartige Bewegung des Tastkopfes (26) und/oder des Kupplungsteils (40) bewirkt, die das Tastwerkzeug (27) aus einer zum Kupplungsteil (40) beabstandeten Position in eine zum Kupplungsteil (40) nahe Position verlagert.

14. Koordinatenmessgerät zum Bestimmen von Raumkoordinaten an einem Messobjekt (30), mit einem Tastkopfsystem nach einem der Ansprüche 1 bis 13 und mit einem Gestellaufbau (14), der dazu ausgebildet ist, den Tastkopf (26) relativ zu dem Messobjekt (30) zu verfahren.

15. Verfahren zum Bestimmen von Raumkoordinaten an einem Messobjekt (30), mit einem Koordinatenmessgerät (10), das einen eine Tastkopfsensorik (53) aufweisenden Tastkopf (26) besitzt, der ein Rumpfteil (38) und ein relativ zum Rumpfteil (38) bewegliches Kupplungsteil (40) aufweist, an dem ein Tastwerkzeug (27) angeordnet ist, sowie einem Gestellaufbau (14), der dazu ausgebildet ist, den Tastkopf (26) relativ zu dem Messobjekt (30) zu verfahren, wobei das Tastwerkzeug (27) mindestens einen Taststift (28) zum Antasten des Messobjektes (30) und einen Drehteller (74) aufweist, über den der Taststift (28) drehbar an das Kupplungsteil (40) angekoppelt ist, **dadurch gekennzeichnet, dass** das Tastwerkzeug (27) gedreht wird, indem der Drehteller (74) an einem am Rumpfteil (38) ausgebildeten Abrollvorsprung (68) durch Bewegen des Kupplungsteils (40) abgerollt wird.

## Claims

1. A probe head system for a coordinate measuring machine (10) for determining spatial coordinates on a measurement object (30), comprising a probe head (26) which has a probe head sensor system (53), a body part (38) and a coupling part (40) moveable relative to the body part (38), with a probe tool (27) being arranged on the coupling part, wherein the probe tool (27) has at least one stylus (28) for making contact with the measurement object (30) and has a rotating plate (74) via which the stylus (28) is rotatably coupled to the coupling part (40), **characterized in that** at least one roll motion projection (68) is formed on the body part (38), on which roll motion projection (68) the rotating plate (74) can be rolled off by means of a movement of the coupling part (40).

2. The probe head system of Claim 1, **characterized in that** the probe head sensor system (53) has at least one measurement force generator (56) which produces the movement of the coupling part (40).

3. The probe head system of Claim 1 or 2, **characterized in that** the roll motion projection (68) is a circular tube (68) which surrounds the rotating plate (74).

4. The probe head system of one of the preceding claims, **characterized by** at least one traction element (76), in particular an O-ring (76), which is arranged between the rotating plate (74) and the roll motion projection (68).

5. The probe head system one of the preceding claims, **characterized in that** the probe head (26) and the probe tool (27) comprise an orientation detection apparatus (84) for detecting an orientation of the rotating plate (74) in rotation direction.

6. The probe head system of Claim 5, **characterized in that** the orientation detection apparatus (84) comprises a plurality of orientation detection elements (84), in particular electrical identification circuits (84), which are each associated with a defined orientation of the probe tool (27), and comprises at least one sensor (64) which interacts with the orientation detection elements (84).

7. The probe head system of Claim 6, **characterized in that** the orientation detection elements (84) are arranged at offset angles with respect to one another in the rotation direction of the rotating plate (74).

8. The probe head system of Claim 6 or 7, **characterized in that** the orientation detection elements (84) each have at least two contacts (82) which are arranged radially one after the other with respect to the rotation direction of the rotating plate (74).

9. The probe head system of one of the preceding Claims, **characterized by** a centering pin (57) moveably arranged on the coupling part (40), with the probe tool (27) being coupled to the coupling part (40) by means of said centering pin.

10. The probe head system of Claim 9, **characterized in that** the moveable centering pin (57) has at least one latching position (140) and at least one rotation position (134).

11. The probe head system of Claim 9 or 10, **characterized in that** the centering pin (57) has at least one conical section (112, 114) which interacts with at least one bearing element (108).

12. The probe head system of Claim 11, **characterized in that** the conical section (112, 114) is mounted without play in the rotation position (134) by means of the bearing element (108), and it is arranged at a distance (138) from the bearing element (108) in the latching position (140).

13. The probe head system of one of the preceding Claims, **characterized by** a control unit (32) which produces a sudden movement of the probe head (26) and/or of the coupling part (40), with said sudden movement moving the probe tool (27) from a position at a distance from the coupling part (40) to a position close to the coupling part (40).

14. A coordinate measuring machine for determining spatial coordinates on a measurement object (30), comprising a probe head system according to one of claims 1 to 13, and comprising a frame structure (14) designed to move the probe head (26) relative to the measurement object (30).

15. A method for determining spatial coordinates on a measurement object (30), comprising a coordinate measuring machine (10) with a probe head (26) which has a probe head sensor system (53), a body part (38) and a coupling part (40) moveable relative to the body part (38), with a probe tool (27) being arranged on coupling part (40), and a frame structure (14) designed to move the probe head (26) relative to the measurement object (30), wherein the probe tool (27) has at least one stylus (28) for making contact with the measurement object (30), and a rotating plate (74) via which the stylus (28) is rotatably coupled to the coupling part (40), **characterized in that** the probe tool (27) is rotated by the rotating plate (74) rolling on a roll motion projection (68), which is formed on the body part (38), by movement of the coupling part (40).

## Revendications

1. Système de palpeur pour un appareil de mesure de coordonnées (10) servant à déterminer les coordonnées dans l'espace au niveau d'un objet à mesurer (30), avec un palpeur (26) comportant un système de capteurs de palpeur (53) possédant une partie de coque (38) et une partie de couplage (40) mobile par rapport à la partie de coque (38) au niveau de laquelle est disposé un outil de palpage (27), l'outil de palpage (27) comportant au moins une tige de palpage (28) servant à toucher l'objet à mesurer (30) et un disque pivotant (74) au-dessus duquel la tige de palpage (28) est rattachée à la partie de couplage (40) de façon à pouvoir pivoter, **caractérisé en ce qu'**au moins une saillie de déroulement (68) est réalisée au niveau de la partie de coque (38), le disque pivotant (74) pouvant être déroulé au niveau de ladite saillie par le biais d'un mouvement de la partie de couplage (40).

2. Système de palpeur selon la revendication 1, **caractérisé en ce que** le système de capteurs de palpeur (53) comporte au moins un générateur de force de mesure (56) réalisant le mouvement de la partie de couplage (40).

3. Système de palpeur selon la revendication 1 ou 2, **caractérisé en ce que** la saillie de déroulement (68) est un tube circulaire (68) entourant le disque pivotant (74).

4. Système de palpeur selon l'une quelconque des revendications précédentes, **caractérisé par** la présence d'au moins un élément de traction (76), notamment un joint torique (76), disposé entre le disque pivotant (74) et la saillie de déroulement (68).

5. Système de palpeur selon l'une quelconque des revendications précédentes, **caractérisé en ce que** le palpeur (26) forme avec l'outil de palpage (27) un dispositif de détection d'orientation (84) servant à détecter l'orientation du disque pivotant (74) dans le sens de rotation.

6. Système de palpeur selon la revendication 5, **caractérisé en ce que** le dispositif de détection d'orientation (84) possède plusieurs éléments de détermination d'orientation (84), notamment des circuits d'identification (84) électriques, respectivement associés à une orientation définie de l'outil de palpage (27) ainsi qu'au moins un capteur (64) entrant en interaction avec les éléments de détermination d'orientation (84).

7. Système de palpeur selon la revendication 6, **caractérisé en ce que** les éléments de détermination d'orientation (84) sont disposés en décalage angulaire les uns par rapport aux autres dans le sens de rotation du disque pivotant (74).

8. Système de palpeur selon la revendication 6 ou 7, **caractérisé en ce que** les éléments de détermination d'orientation (84) comportent respectivement au moins deux contacts (82) disposés les uns à la suite des autres dans le plan radial par rapport au sens de rotation du disque pivotant (74).

9. Système de palpeur selon l'une quelconque des revendications précédentes, **caractérisé par** la présence d'un tenon de centrage (57) disposé de façon mobile au niveau de la partie de couplage (40) et servant à rattacher l'outil de palpage (27) à la partie de couplage (40).

10. Système de palpeur selon la revendication 9, **caractérisé en ce que** le tenon de centrage (57) mobile présente au moins une position d'arrêt (140) et au moins une position de pivotement (134).

11. Système de palpeur selon la revendication 9 ou 10, **caractérisé en ce que** le tenon de centrage (57) comporte au moins une section (112, 114) de forme conique entrant en interaction avec au moins un élément de palier de roulement (108).

12. Système de palpeur selon la revendication 11, **caractérisé en ce que** la section (112, 114) de forme conique est disposée sans jeu dans la position de pivotement (134) grâce à l'élément de palier de roulement (108) et est disposé à une certaine distance (138) de l'élément de palier de roulement (108) dans la position d'arrêt (140).

13. Système de palpeur selon l'une quelconque des revendications précédentes, **caractérisé par** la présence d'une unité de commande (32) effectuant le mouvement sautant de le palpeur (26) et/ou de la partie de couplage (40) permettant de déplacer l'outil de palpage (27) d'une position écartée par rapport à la partie de couplage (40) dans une position située à proximité de la partie de couplage (40).

14. Appareil de mesure de coordonnées servant à déterminer les coordonnées dans l'espace au niveau d'un objet à mesurer (30), avec un système de palpeur selon l'une quelconque des revendications 1 à 13 et avec un châssis (14) conçu pour déplacer le palpeur (26) par rapport à l'objet à mesurer (30).

15. Procédé de détermination des coordonnées dans l'espace au niveau d'un objet à mesurer (30), avec un appareil de mesure de coordonnées (10) possédant un palpeur (26) comportant un système de capteurs de palpeur (53) comportant une partie de coque (38) et une partie de couplage (40) mobile par rapport à la partie de coque (38) au niveau de laquelle est disposé un outil de palpage (27) ainsi qu'une structure de châssis (14) conçue pour déplacer le palpeur (26) par rapport à l'objet à mesurer (30), l'outil de palpage (27) comportant au moins une tige de palpage (28) servant à toucher l'objet à mesurer (30) et un disque pivotant (74) au-dessus duquel la tige de palpage (28) est rattachée à la partie de couplage (40) de façon à pouvoir pivoter, caractérisé en ce l'outil de palpage (27) est pivoté en même temps que le disque pivotant (74) est déroulé au niveau d'une saillie de déroulement (68) formée au niveau de la partie de coque (38), par le biais d'un mouvement de la partie de couplage (40).
